# EUROPEAN PATENT APPLICATION

(11) **EP 3 392 851 A1**
(43) Date of publication of application: **24.10.2018**
(21) Application number: 18167757.6
(22) Date of filing: 17.04.2018
(51) Int. Cl.: G07G 1/12, G07G 1/14, G06Q 20/20

(54) **REGISTER SYSTEM**

(30) Priority: 17.04.2017 JP 2017081208; 01.11.2017 JP 2017211509
(71) Applicant: Toshiba TEC Kabushiki Kaisha, Tokyo 141-8562 (JP)
(72) Inventor: HIRAMATSU, Kenya, Shinagawa-ku,, Tokyo 141-8562 (JP); SUGITA, Nobuhiro, Shinagawa-ku,, Tokyo 141-8562 (JP); GOTANDA, Tsuyoshi, Shinagawa-ku,, Tokyo 141-8562 (JP); SUSAKI, Akiko, Shinagawa-ku,, Tokyo 141-8562 (JP)
(74) Representative: Takeuchi, Maya

(57) **Abstract**

A register system includes a plurality of computing devices communicating with each other over the network to improve functionality of the register system. The register system includes a server device and a plurality of register devices connected to the server device over the network, wherein each of the registers devices is configured to transmit status data to the server, and the server device is configured to generate management data from the status data and output to a mobile device the management data for improving the functionality of the register system.

## Description

### FIELD

The present invention relates to the field of a register system in general, and embodiments described herein relates to a register system for money stock management.

### BACKGROUND

Retail stores such as supermarkets typically use sales data processing devices such as point of sales (POS) terminals. A POS terminal includes a change machine which automatically accepts cash received from a customer and dispenses change.

In the POS terminal, since cash accepting and dispensing occurs with sales data processing, a store clerk needs to replenish change and collect cash from the change machine. In the related art, techniques relating to replenishment of change and collection of cash have been proposed. For example, a technique has been proposed for replenishing notes collected from one change machine to another change machine.

However, with the above-described technique, since the change machine from which cash is collected and the change machine that is replenished are associated one-on-one, it was not possible to replenish cash collected from a plurality of change machines to one change machine or to replenish the cash collected from one change machine to a plurality of change machines.

To solve such problem, there is provided a register system including a plurality of computing devices communicating with each other over the network to improve functionality of the register system, said register system comprising: a server device; and a plurality of register devices connected to the server device over the network, wherein each of the registers devices is configured to transmit status data to the server, and the server device is configured to generate management data from the status data and output to a mobile device the management data for improving the functionality of the register system.

Preferably, the server device includes: a storage device that stores for each of the register devices, data relating to required maintenance including at least one of collecting cash and replenishing cash; and a processor configured to: receive as the status data, from each of the plurality of register devices, cash balance information of each denomination of cash stored in the corresponding register device, determine, for each of the plurality of register devices and based on the corresponding received cash balance compared to the maintenance condition, whether the required maintenance needs to be performed, for each of the plurality of register devices on which the required maintenance needs to be performed, determine an order for performing the required maintenance and an amount of cash to be collected or replenished, and generate and transmit, to the mobile device, the management data, which includes the determined order for performing the required maintenance of each of the plurality of register devices on which the required maintenance needs to be performed, and the determined amount of cash to be collected or replenished for each of the plurality of register devices on which the required maintenance needs to be performed.

Preferably still, the maintenance information further includes list screen information for displaying, on a display of the mobile device, a list screen that includes a list of each of the plurality of register devices on which the required maintenance needs to be performed arranged in the determined order.

Preferably yet, the list screen accepts an input with respect to any one of the plurality of register devices on which the required maintenance needs to be performed, and the maintenance information further includes detailed screen information for displaying, on the display of the mobile device in response to the accepted input, a detailed screen that includes: details of the required maintenance to be performed on the one of the plurality of register devices corresponding to the input, and a code symbol that, when scanned by the one of the plurality of register devices corresponding to the input, causes the register device to dispense or accept cash in accordance with the required maintenance.

Suitably, the order is determined according to a selected one of a plurality of settings.

Suitably still, one of the plurality of settings is a normal setting in which the order is determined in accordance with a predetermined order.

Suitably yet, another one of the plurality of settings is an offset setting in which the order is determined so that cash collected in accordance with the required maintenance for one of the plurality of register devices can subsequently be used to replenish cash in accordance with the required maintenance for another one of the plurality of register devices.

Typically, another one of the plurality of settings is a rearrangement setting in which the order is determined so that each of the plurality of register devices are grouped according to whether the corresponding required maintenance is one of: only collecting cash, collecting and replenishing cash, and only replenishing cash.

Typically still, the determined amount of cash to be collected or replenished includes a unit amount of each denomination of cash to be collected or replenished.

Typically yet, the required maintenance is determined to be performing replenishment of cash when a unit amount of at least one denomination of cash stored in the corresponding register device is less than a predetermined amount.

Preferably, the required maintenance is determined to be performing collection of cash when a unit amount of at least one denomination of cash stored in the corresponding register device exceeds a predetermined amount.

The invention also relates to a method of managing cash stored in a plurality of register devices that dispense and receive cash, the method comprising: storing a maintenance condition indicating a required maintenance for one of the plurality of register devices, the required maintenance including at least one of collecting cash and replenishing cash; receiving, from each of the plurality of register devices, cash balance information of each denomination of cash stored in the corresponding register device; determining, for each of the plurality of register devices and based on the corresponding received cash balance compared to the maintenance condition, whether the required maintenance needs to be performed; for each of the plurality of register devices on which the required maintenance needs to be performed, determining an order for performing the required maintenance and an amount of cash to be collected or replenished; and generating and transmitting, to a mobile device, maintenance information including: the determined order for performing the required maintenance of each of the plurality of register devices on which the required maintenance needs to be performed, and the determined amount of cash to be collected or replenished for each of the plurality of register devices on which the required maintenance needs to be performed.

Preferably, in the method, the maintenance information further includes list screen information for displaying, on a display of the mobile device, a list screen that includes a list of each of the plurality of register devices on which the required maintenance needs to be performed arranged in the determined order.

Preferably still, in the method the list screen accepts an input with respect to any one of the plurality of register devices on which the required maintenance needs to be performed, and the maintenance information further includes detailed screen information for displaying, on the display of the mobile device in response to the accepted input, a detailed screen that includes: details of the required maintenance to be performed on the one of the plurality of register devices corresponding to the input, and a code symbol that, when scanned by the one of the plurality of register devices corresponding to the input, causes the register device to dispense or accept cash in accordance with the required maintenance.

Preferably yet, in the method, the order is determined according to a selected one of a plurality of settings.

Suitably, in the method, one of the plurality of settings is a normal setting in which the order is determined in accordance with a predetermined order.

Suitably still, in the method another one of the plurality of settings is an offset setting in which the order is determined so that cash collected in accordance with the required maintenance for one of the plurality of register devices can subsequently be used to replenish cash in accordance with the required maintenance for another one of the plurality of register devices.

Suitably yet, in the method another one of the plurality of settings is a rearrangement setting in which the order is determined so that each of the plurality of register devices are grouped according to whether the corresponding required maintenance is one of: only collecting cash, collecting and replenishing cash, and only replenishing cash.

Typically, in the method, the required maintenance is determined to be performing replenishment of cash when a unit amount of at least one denomination of cash stored in the corresponding register device is less than a predetermined amount.

Typically still, in the method, the required maintenance is determined to be performing collection of cash when a unit amount of at least one denomination of cash stored in the corresponding register device exceeds a predetermined amount.

The invention also concerns a non-transitory computer readable medium storing a program causing a computer to execute the above method.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram showing an example of a cash management system according to the present embodiment.
FIG. 2 is a block diagram showing an example configuration of a POS terminal.
FIG. 3 is a block diagram showing an example configuration of a store server.
FIG. 4 is a diagram showing an example data configuration of a balance information table.
FIG. 5 is a block diagram showing an example configuration of a mobile terminal.
FIG. 6 is a block diagram showing an example functional configuration of each device of the cash management system.
FIG. 7 is a diagram showing an example of a list screen.
FIG. 8 is a diagram showing an example of a detailed screen.
FIG. 9 is a flowchart showing an example of maintenance notification processing.
FIG. 10 is a flowchart showing an example of generation processing according to a normal setting.
FIG. 11 is a flowchart showing an example of generation processing according to an offset setting.
FIG. 12 is a flowchart showing an example of generation processing according to a rearrangement setting.
FIG. 13 is a flowchart showing an example of maintenance processing.

### DETAILED DESCRIPTION

A register system includes a plurality of computing devices communicating with each other over the network to improve functionality of the register system. The register system includes a server device and a plurality of register devices connected to the server device over the network, wherein each of the registers devices is configured to transmit status data to the server, and the server device is configured to generate management data from the status data and output to a mobile device the management data for improving the functionality of the register system.

An embodiment of a server device and a cash management system will be described in detail below with reference to drawings. The embodiment described below is an embodiment of a server device and a cash management system and does not limit the configuration or specification thereof. The server device of the present embodiment is an example of a server device of a cash management system that manages a cash handling device included in a point of sales (POS) terminal installed in a store.

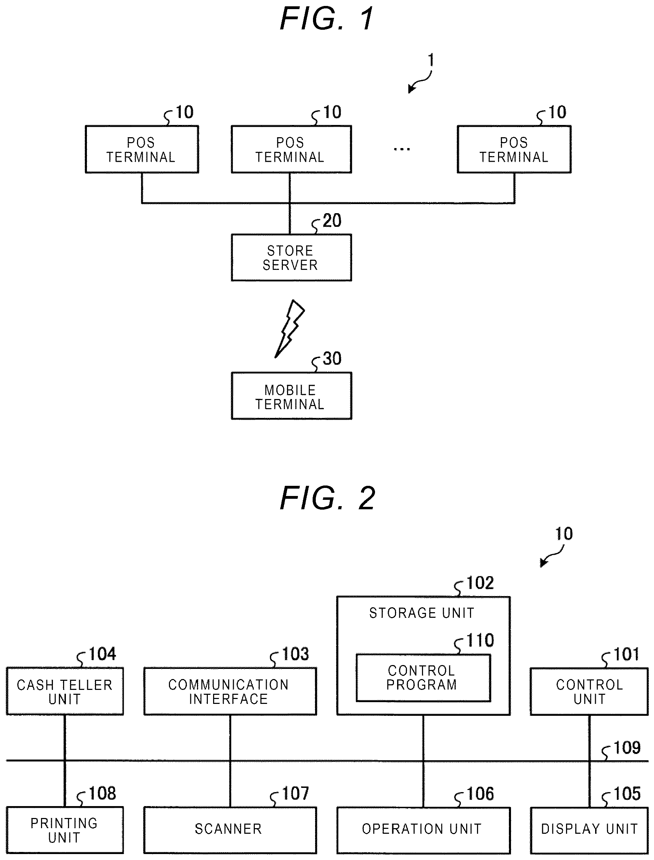

FIG. 1 is a diagram showing an example of a management system 1 according to the present embodiment. The management system 1 includes a POS terminal 10, a store server 20, and a mobile terminal 30. Then, the POS terminal 10 and the store server 20 are connected via a network such as a wired or wireless in-store LAN (Local Area Network), for example. In addition, the store server 20 and the mobile terminal 30 are connected via a network such as a wireless LAN or a mobile communication line. In the management system 1 shown in FIG. 1, one store server 20 and one mobile terminal 30 are illustrated, but the number of each device is not limited.

The POS terminal 10 is a sales data processing device that executes sales registration processing for registering commodities to be sold. The POS terminal also performs accounting processing of registered commodities. In addition, the POS terminal 10 includes a cash teller unit 104 (see FIG. 2) that executes accepting and dispensing of cash in processing such as accounting processing. Then, the POS terminal 10 transmits balance information indicating a balance for each denomination of cash stored in the cash teller unit 104 to the store server 20.

The store server 20 is a server device that manages the POS terminal 10. The store server 20 manages the number of each denomination of cash stored in the cash teller unit 104 of each POS terminal 10 based on the balance information transmitted from each POS terminal 10. In addition, the store server 20 calculates the amount for each denomination of cash to be collected from the cash teller unit 104 and the amount for each denomination of cash to be replenished in the maintenance processing for adjusting the balance of the cash teller unit 104 of the POS terminal 10.

The mobile terminal 30 is a portable terminal such as a smartphone or a tablet terminal. The mobile terminal 30 displays the amount of each denomination to be collected from the cash teller unit 104 of each POS terminal 10 and the amount of each denomination to be replenished, which is calculated by the store server 20. The store clerk executes collection or replenishment with respect to the cash teller unit 104 of each POS terminal 10 according to a collection instruction and a replenishment instruction displayed on the mobile terminal 30.

Next, a configuration of various devices included in the management system 1 will be described.

FIG. 2 is a block diagram showing an example configuration of the POS terminal 10. The POS terminal 10 includes a control unit 101, a storage unit 102, a communication interface 103, a cash teller unit 104, a display unit 105, an operation unit 106, a scanner 107, and a printing unit 108. These units are mutually connected via a system bus 109 such as a data bus, an address bus, and the like.

The control unit 101 is a computer that controls the overall operation of the POS terminal 10 and realizes various functions of the POS terminal 10. The control unit 101 includes a central processing unit (CPU), a read-only memory (ROM), and a random access memory (RAM). The CPU controls the operation of the POS terminal 10. The ROM is a storage medium that stores various programs and various data. The RAM is a storage medium that temporarily stores various programs and various data. Then, the CPU executes a program stored in the storage medium such as the ROM or the storage unit 102 with the RAM as a work area.

The storage unit 102 is a storage device such as a hard disk drive (HDD) or a solid-state drive (SSD). The storage unit 102 stores a control program 110. The control program 110 is a program for causing the functions of the POS terminal 10 to be executed. The control program 110 includes a program for exercising the functions according to the present embodiment.

The communication interface 103 is an interface for communicating with the store server 20 via a network.

The cash teller unit 104 is a cash teller device that stores cash such as coins and bills received from a deposit port in the storage unit. In addition, the cash teller unit 104 dispenses cash such as coins and bills as change from the storage unit to a dispensing port, for example. Further, the cash teller unit 104 stores the cash stored in the storage unit in the amount of the balance for each denomination by counting the cash accepted or dispensed.

The display unit 105 is a display device such as a liquid crystal display. In addition, the display unit 105 may be a display overlaid with a touch panel. The operation unit 106 is an input device such as a keyboard, for example. In addition, the operation unit 106 may be the touch panel overlaid on the display unit 105.

The scanner 107 reads a code symbol or the like indicating a commodity code which is identification information for identifying a commodity. The printing unit 108 is a printer that prints information such as receipts and transaction reports on paper.

The POS terminal 10 may have a coin-roll drawer. The coin-roll drawer is a device that stores coin-rolls inside and records discharge and insertion of the coin-rolls. In addition, each coin-roll is a set of predetermined number of coins for each denomination of coins.

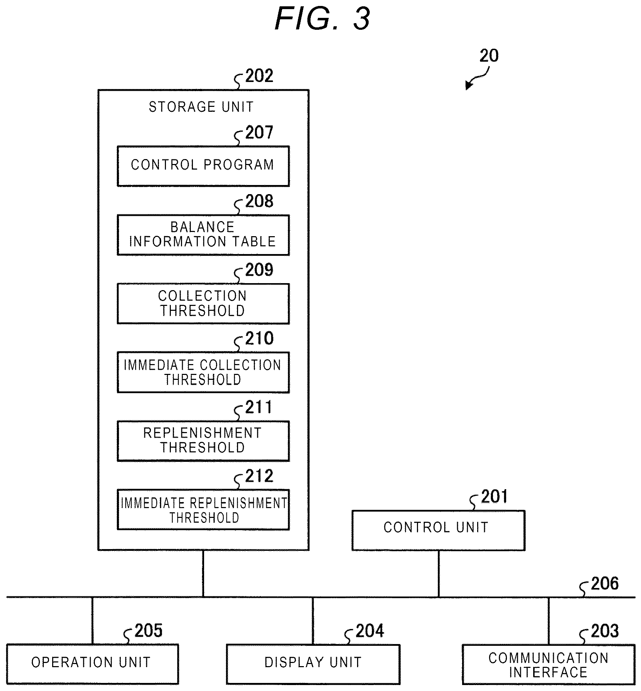

FIG. 3 is a block diagram showing an example configuration of the store server 20. The store server 20 includes a control unit 201, a storage unit 202, a communication interface 203, a display unit 204, and an operation unit 205. These units are mutually connected via a system bus 206 such as a data bus, an address bus, and the like.

The control unit 201 is a computer that controls the overall operation of the store server 20 and realizes various functions of the store server 20. The control unit 201 includes a CPU, a ROM, and a RAM. The CPU controls the operation of the store server 20. The ROM is a storage medium that stores various programs and various data. The RAM is a storage medium that temporarily stores various programs and various data. Then, the CPU executes the programs stored in the storage medium such as the ROM or the storage unit 202 with the RAM as a work area.

The storage unit 202 is a storage device such as an HDD or an SSD. The storage unit 202 stores a control program 207, a balance information table 208, a collection threshold 209, an immediate collection threshold 210, a replenishment threshold 211, and an immediate replenishment threshold 212.

The control program 207 is a program for causing the functions of the store server 20 to be executed. The control program 207 includes a program for exercising the characteristic functions according to the present embodiment.

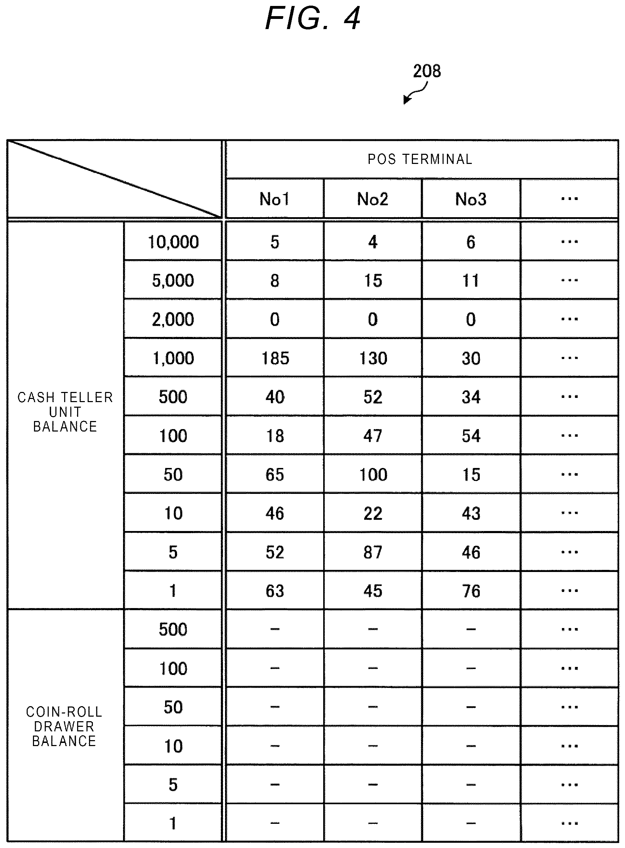

FIG. 4 is a diagram showing an example data configuration of the balance information table 208. The balance information table 208 stores balance information received from each POS terminal 10. That is, the balance information table 208 stores the amount of cash stored in the cash teller unit 104 of each POS terminal 10 for each denomination. In addition, if each POS terminal 10 includes the coin-roll drawer, the balance information table 208 stores the number of coin-rolls stored in the coin-roll drawer for each denomination.

The collection threshold 209 is a threshold for requesting collection of the cash stored in the cash teller unit 104. The immediate collection threshold 210 is a value higher than the collection threshold 209 and is an upper limit value for requesting prompt collection of the cash stored in the cash teller unit 104. The collection threshold 209 is, for example, 10% less than the immediate collection threshold 210. As an example, in the case of a 100 Yen coin, the immediate collection threshold 210 is 150, and the collection threshold 209 is 135.

The replenishment threshold 211 is a threshold for requesting replenishment of the cash stored in the cash teller unit 104. The immediate replenishment threshold 212 is a value lower than the replenishment threshold 211 and is a lower limit value for requesting prompt replenishment of the cash stored in cash teller unit 104. In addition, in the collection threshold 209, the immediate collection threshold 210, the replenishment threshold 211, and the immediate replenishment threshold 212, thresholds for each denomination are set. In addition, the replenishment threshold 211 is, for example, a value that is 10% greater than the immediate replenishment threshold 212. For example, in the case of a 100 Yen coin, the immediate replenishment threshold 212 is 20 and the replenishment threshold 211 is 22. The collection threshold 209, the immediate collection threshold 210, the replenishment threshold 211, and the immediate replenishment threshold 212 may be set for each date, time, or time period. That is, the number of customers visiting is different depending on the date, time, and time period. Therefore, for a peak period, lower values may be set with respect to the immediate collection threshold 210 and the collection threshold 209 than in an off-peak period. Further, with respect to the replenishment threshold 211 and the immediate replenishment threshold 212, it is possible to set higher values for the peak period than in the off-peak period.

The communication interface 203 is an interface for communicating with the POS terminal 10 and the mobile terminal 30 via the network.

The display unit 204 is a display device such as a liquid crystal display. The operation unit 205 is an input device such as a keyboard or a mouse, for example.

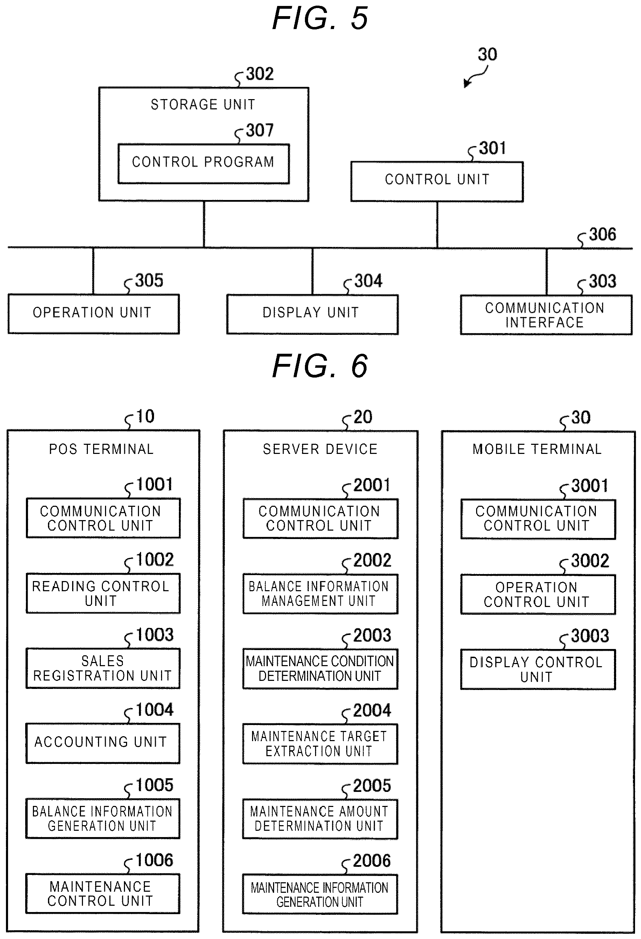

FIG. 5 is a block diagram showing an example o configuration of the mobile terminal 30. The mobile terminal 30 includes a control unit 301, a storage unit 302, a communication interface 303, a display unit 304, and an operation unit 305. These units are mutually connected via a system bus 306 such as a data bus, an address bus, and the like.

The control unit 301 is a computer that controls the overall operation of the mobile terminal 30 and realizes various functions of the mobile terminal 30. The control unit 301 includes a CPU, a ROM, and a RAM. The CPU controls the operation of the mobile terminal 30. The ROM is a storage medium that stores various programs and various data. The RAM is a storage medium that temporarily stores various programs and various data. Then, the CPU executes the programs stored in the storage medium such as the ROM or the storage unit 302 with the RAM as a work area.

The storage unit 302 is a storage device such as a flash memory. The storage unit 302 stores a control program 307. The control program 307 is a program for causing the functions of the mobile terminal 30 and the operating system to be executed. The control program 307 includes a program for executing the functions according to the present embodiment.

The communication interface 303 is an interface for communicating with the store server 20 via a network such as a wireless LAN or a mobile communication line.

The display unit 304 is a display device such as a liquid crystal display. The operation unit 305 is, for example, a touch panel overlaid on the display unit 304. The operation unit 305 detects a touch-operated area on the display unit 304 and determines that an operation corresponding to a display element displayed on the display unit 304 is input. As a result, the operation unit 305 accepts the operation of a key when the key displayed by the display unit 304 is operated. The operation unit 305 is not limited to the touch panel and may include a hardware key.

Next, the functions of the components of the management system 1 will be described. FIG. 6 is a block diagram showing an example of a functional configuration of each device of the management system 1.

The control unit 101 of the POS terminal 10 executes the control program 110 of the storage unit 102 in the RAM and operates in accordance with the control program 110, thereby generating each functional unit shown in FIG. 6 on the RAM. Specifically, the control unit 101 of the POS terminal 10 includes, as functional units, a communication control unit 1001, a reading control unit 1002, a sales registration unit 1003, an accounting unit 1004, a balance information generation unit 1005, and a maintenance control unit 1006.

The communication control unit 1001 controls the communication interface 103 to execute communication with the store server 20.

The reading control unit 1002 controls the scanner 107 to read a bar code or a code symbol such as a two-dimensional code. For example, the reading control unit 1002 reads a code symbol attached to a commodity or a price tag indicating a commodity code for identifying the commodity. In addition, the reading control unit 1002 reads a code symbol indicating an execution request for requesting the POS terminal 10 to execute various processing.

The sales registration unit 1003 controls sales registration for registering commodities to be sold to customers. For example, the sales registration unit 1003 registers sales of the commodity corresponding to the commodity code read by the reading control unit 1002.

The accounting unit 1004 controls accounting processing of the commodity or commodities registered by the sales registration unit 1003. For example, the accounting unit 1004 calculates change by subtracting a total amount from the amount received from the customer.

The balance information generation unit 1005 generates balance information indicating the balance for each denomination of the cash stored in the cash teller unit 104. For example, the balance information generation unit 1005 generates balance information by counting the number of bills (or coins) accepted in the cash teller unit 104 for each denomination and the number of the bills (or coins)dispensed from the cash teller unit 104 for each denomination. Then, the balance information generation unit 1005 causes the store server 20 to transmit the generated balance information to the communication control unit 1001. Then, for example, the balance information generation unit 1005 generates balance information every time receiving or dispensing of cash occurs and causes the store server 20 to transmit the balance information to the communication control unit 1001.

The maintenance control unit 1006 executes maintenance processing for adjusting the balance of the cash stored in the cash teller unit 104. That is, the maintenance control unit 1006 controls collection and replenishment of the cash stored in the cash teller unit 104. For example, when the reading control unit 1002 reads a code symbol for instructing collection of cash, the maintenance control unit 1006 dispenses the instructed denomination based on the instruction corresponding to the code symbol. In addition, when the reading control unit 1002 reads a code symbol for instructing replenishment of cash, the maintenance control unit 1006 receives the indicated amount for the instructed denomination based on the instruction of the code symbol. In addition, when the reading control unit 1002 reads a code symbol indicating both collection and replenishment of cash, the maintenance control unit 1006 executes dispensing and accepting based on the instruction of the code symbol. The maintenance control unit 1006 is not limited to reading by the reading control unit 1002, but may receive an instruction to collect and replenish cash by another method.

The control unit 201 of the store server 20 executes the control program 207 of the storage unit 202 in the RAM and operates in accordance with the control program 207 to generate each functional unit shown in FIG. 6 on the RAM. Specifically, the control unit 201 of the store server 20 includes, as functional units, a communication control unit 2001, a balance information management unit 2002, a maintenance condition determination unit 2003, a maintenance target extraction unit 2004, a maintenance amount determination unit 2005, a maintenance information generation unit 2006.

The communication control unit 2001 is an example of a receipt unit and a first transmission unit. The communication control unit 2001 controls the communication interface 203 to execute communication with the POS terminal 10 and the mobile terminal 30.

When the communication control unit 2001 receives the balance information, the balance information management unit 2002 stores the balance information in the balance information table 208.

The maintenance condition determination unit 2003 is an example of a determination unit. The maintenance condition determination unit 2003 determines whether or not a maintenance condition for requiring execution of maintenance to adjust the balance of cash is satisfied. That is, the maintenance condition determination unit 2003 determines whether or not the maintenance condition for requesting collection or replenishment of cash is satisfied. Here, an arbitrary condition may be set as the maintenance condition. Further, a plurality of conditions may be set as the maintenance condition. For example, the maintenance condition may be a predetermined time. In addition, the maintenance condition may be set as the POS terminal 10 storing cash equal to or more than the number set in the immediate collection threshold 210, or that the POS terminal 10 storing cash equal to or less than the number set in the immediate replenishment threshold 212. Further, the maintenance condition may be set as the proportion of the POS terminals 10 storing cash is equal to or more than the number set in the collection threshold 209 being greater than or equal to the set value. Further, the maintenance condition may be set as the cash equal to or less than the number set in the replenishment threshold 211 being stored.

The maintenance target extraction unit 2004 is an example of an extraction unit. Based on the balance information table 208, the maintenance target extraction unit 2004 extracts maintenance target machines to adjust the balance of the cash teller unit 104 out the plurality of POS terminals 10. That is, on the condition that the maintenance condition determination unit 2003 determines that the maintenance condition is satisfied, the maintenance target extraction unit 2004 extracts the POS terminals 10 having cash to be collected or to be replenished with cash. For example, the maintenance target extraction unit 2004 extracts each POS terminal 10 having the balance equal to or larger than the immediate collection threshold 210 or the collection threshold 209 as a maintenance target machine. In addition, the maintenance target extraction unit 2004 extracts each POS terminal 10 having the balance equal to or less than the immediate replenishment threshold 212 or the replenishment threshold 211 as a maintenance target machine.

The maintenance amount determination unit 2005 determines a total value to be collected or replenished with respect to each of the maintenance target machines for each denomination. That is, the maintenance amount determination unit 2005 determines the amount or the number of cash to be collected or replenished for each denomination. Here, the collection amount and the replenishment amount may be set to arbitrary amounts so that the balance for each denomination is less than the collection threshold 209 and is larger than the replenishment threshold 211. For example, the collected amount and the replenished amount may be arbitrary amounts specified for each denomination. In addition, the collection amount may be a uniform amount regardless of whether the collection amount is equal to or larger than the immediate collection threshold 210 or equal to or larger than the collection threshold 209. In addition, the collection amount may be a different amount depending on whether the collection amount is equal to or larger than the immediate collection threshold 210 or equal to or larger than the collection threshold 209. In addition, the collection amount may be an amount obtained by subtracting a preset amount from the balance. The replenishment amount as well as the collection amount may be a uniform amount regardless of whether the replenishment is the immediate replenishment threshold 212 or less or the replenishment threshold 211 or less. In addition, the replenishment amount may be a different amount depending on whether the replenishment amount is the immediate replenishment threshold 212 or less or the replenishment threshold 211 or less. In addition, the replenishment amount may be an amount obtained by subtracting the balance from a preset amount.

The maintenance information generation unit 2006 is an example of a first determination unit, a second determination unit, a first calculation unit, and a second calculation unit. The maintenance information generation unit 2006 generates maintenance information indicating the maintenance required to adjust the balance. Here, the maintenance information is information including a maintenance order, a maintenance content, a reserve amount, and an estimated amount to be collected. The maintenance order is information indicating the order for executing maintenance with respect to each of the maintenance target machines. The maintenance content is an adjustment content for adjusting the cash of the cash teller unit 104 and the like. For example, the maintenance content is information indicating either collection, collection and replenishment, or replenishment of cash. Further, the maintenance content includes a total value of cash to be replenished or collected for each denomination. Then, the total value may be a total amount for each denomination or may be the number of bills (or coins) for each denomination. The reserve amount is information indicating an amount that does not cause a shortage of cash to be replenished for each denomination when the balance is adjusted according to the maintenance order. The estimated collection amount is information indicating an amount to be collected for each denomination when the balance is adjusted according to the maintenance order. Then, when the maintenance condition determination unit 2003 determines that the maintenance condition determination unit 2003 satisfies the maintenance condition, the maintenance information generation unit 2006 specifies the mobile terminal 30 as a transmission destination and causes the communication control unit 2001 to transmit a maintenance request including the generated maintenance information.

Here, the maintenance information generation unit 2006 generates maintenance information based on a generation setting for generating maintenance information. For example, the generation setting includes a normal setting, an offset setting, and a rearrangement setting. Then, in the generation setting, setting information selected from the normal setting, the offset setting, and the rearrangement setting is set. Here, it is assumed that a method of selecting the generation setting is not limited. For example, the generation setting may be set according to the setting information selected by the operation accepted by the operation unit 205, or the setting information selected by the information received by the communication interface 203.

The "normal setting" is a setting that the order of priority for executing predetermined maintenance is set in the maintenance order. Then, the normal setting is a setting that the collected cash is not used for replenishment. In other words, the normal setting is a setting in which the total amount of the cashed to be replenished to each maintenance target machine is set as the reserve amount. The order of priority is, for example, an order in which the distance from a back office where the notes to be replenished is stored is short.

The "offset setting" is a setting for setting the order of priority for executing the predetermined maintenance in the maintenance order. Then, the offset setting is a setting in which the cash collected from one or a plurality of maintenance target machines is used for replenishment of another one of the plurality of maintenance target machines. That is, the offset setting is a setting in which the amount for each denomination that does not cause shortage with respect to the replenishment amount determined by the maintenance amount determination unit 2005 as the reserve amount when the cash collected from each maintenance target machine is used for replenishment.

The "rearrangement setting" is a setting that the maintenance order is rearranged so that the reserve amount is reduced. Then, the rearrangement setting is a setting that the collected cash is used for replenishment. More specifically, in the case of the rearrangement setting, the maintenance information generation unit 2006 classifies the maintenance target machines according to the maintenance content such as collection, collection and replenishment, or replenishment. Then, the maintenance information generation unit 2006 arranges the order according to groups of the maintenance target machines classified as collection, the maintenance target machines classified as collection and replenishment, and the maintenance target machines classified as replenishment.

Next, the maintenance information generation unit 2006 arranges each of the maintenance target machines (first maintenance target machines) categorized for collection in the order of a predetermined order of priority. When the cash collected from the first maintenance target machines and the second maintenance target machines is used for replenishment with respect to each of the maintenance target machines (second maintenance target machines) classified as collection and replenishment, the maintenance information generation unit 2006 determines whether or not the replenishment amount determined by the maintenance amount determination unit 2005 can be replenished. Then, the maintenance information generation unit 2006 arranges second maintenance target machines that can be replenished in order of priority. In addition, the maintenance information generation unit 2006 arranges the second maintenance target machines that cannot be replenished in order of priority after the second maintenance target machines that can be replenished.

Next, the maintenance information generation unit 2006 arranges each of the maintenance target machines (third maintenance target machines) categorized as replenishment in order of priority after the second maintenance target machines that cannot be replenished. Then, the maintenance information generation unit 2006 set the amount for each denomination that does not cause a shortage of the replenishment amount determined by the maintenance amount determination unit 2005 as the reserve amount when the cash collected from the first maintenance target machines and the second maintenance target machines is used for replenishment.

In addition, in some cases, collection or replenishment of cash may not be possible due to maintenance target machines being in use. In such a case, the communication control unit 2001 receives a change request for requesting a change of the maintenance order of the maintenance target machines. When the communication control unit 2001 receives the change request, the maintenance information generation unit 2006 generates again the maintenance information in which the maintenance order of the maintenance target machines is changed. For example, the maintenance information generation unit 2006 generates maintenance information in which the maintenance order of the maintenance target machines that cannot be maintained is lowered. Here, the lowered range of the maintenance order is arbitrary. For example, the maintenance information generation unit 2006 may set the maintenance order of the maintenance target machines that cannot be maintained to be last or one lower than the maintenance target machines for which the order is maintained.

The control unit 301 of the mobile terminal 30 executes the control program 307 of the storage unit 302 in the RAM and operates in accordance with the control program 307, thereby generating each functional unit shown in FIG. 6 on the RAM. Specifically, the control unit 301 of the mobile terminal 30 includes, as functional units, a communication control unit 3001, an operation control unit 3002, and a display control unit 3003.

The communication control unit 3001 is an example of a second transmission unit. The communication control unit 3001 controls the communication interface 303 to execute communication with the store server 20.

The operation control unit 3002 controls the operation unit 305 to accept operations corresponding to various screens.

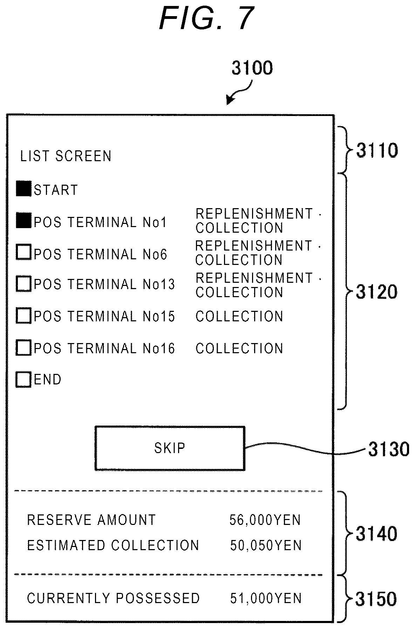

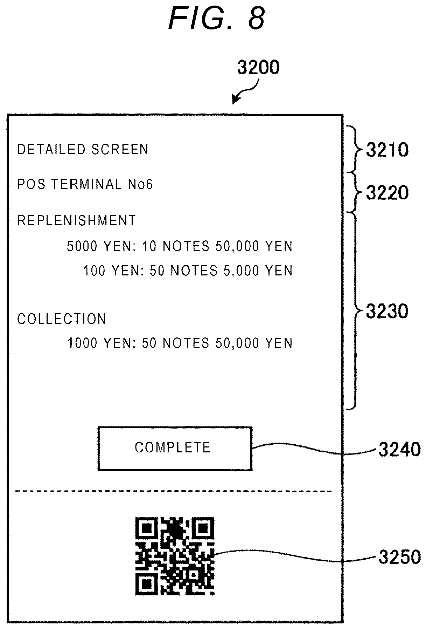

The display control unit 3003 controls the display unit 304 to display various screens. For example, the display control unit 3003 displays a list screen 3100 (see FIG. 7) and a detailed screen 3200 (see FIG. 8) based on the maintenance information received by the communication control unit 3001.

FIG. 7 is a diagram showing an example of the list screen 3100. The list screen 3100 is a screen showing a list of maintenance target machines for adjusting the balance. The list screen 3100 includes a title area 3110, a list area 3120, a skip button 3130, a summary area 3140, and a possession area 3150. The title area 3110 is an area for displaying titles. The list area 3120 is an area for displaying a list in which the maintenance target machines for adjusting the balance and the maintenance content to be executed with respect to the maintenance target machines are arranged in order from the top in the maintenance order. In addition, in the list area 3120, execution marks indicated by squares are included. The execution mark is a mark indicating whether or not the execution of the maintenance content is completed. The filled execution mark indicates that execution of the maintenance content is completed. On the other hand, the unfilled execution mark indicates that execution of the maintenance content is not completed. The list screen 3100 shown in FIG. 7 indicates that "START" and "POS terminal No. 1 replenishment and collection" are completed. Then, when there is a touch operation on the character string portion of the list area 3120, the display control unit 3003 displays the detailed screen 3200 to be described later. The display control unit 3003 displays the reserve amount when there is a touch operation on "START". That is, the display control unit 3003 displays the amount for each denomination and the total amount. The display control unit 3003 displays the estimated amount collected when there is a touch operation on "END". That is, the display control unit 3003 displays the amount for each denomination and the total amount.

The skip button 3130 is a button for requesting a change of maintenance information. For example, the skip button 3130 is pressed when collection or replenishment of notes cannot be performed, such as when the maintenance target machine instructed as next in the maintenance order is in use. Then, when there is a touch operation on the skip button 3130, the communication control unit 3001 specifies a maintenance target machine that cannot be maintained and transmits a request for changing the maintenance information to the store server 20. Here, for the maintenance target machine that cannot be maintained, the maintenance target machine with the earliest maintenance order is specified among the maintenance target machines that are not yet maintained. The method of specifying a maintenance target machine that cannot be maintained is not limited thereto. For example, one or a plurality of maintenance target machines specified by the operation accepted by the operation control unit 3002 may be specified as maintenance target machine that cannot be maintained.

Then, when the communication control unit 3001 receives the maintenance information as a response to the change request, the display control unit 3003 displays the list screen 3100 based on the received maintenance information. In the case of the list screen 3100 shown in FIG. 7, the communication control unit 3001 specifies "POS terminal No. 6 replenishment and collection" as a maintenance target machine which cannot be maintained and transmits a request for changing the maintenance information to store server 20. The summary area 3140 is an area displaying the total amount of the reserve amount and the total amount of the estimated collection amount. The possession area 3150 is an area displaying the total amount currently possessed in a series of maintenance.

FIG. 8 is a diagram showing an example of the detailed screen 3200. The detailed screen 3200 is a screen displaying details of the content of maintenance executed with respect to the maintenance target machine. The detailed screen 3200 includes a title area 3210, a target area 3220, a detailed area 3230, a completion button 3240, and a detailed code symbol 3250. The title area 3210 is an area for displaying titles. The target area 3220 is an area for displaying the maintenance target machine that performs maintenance. The detailed area 3230 is an area for displaying the amount for each denomination, the quantity, and the total amount for each denomination for replenishment and collection. The completion button 3240 is a button to be pressed when maintenance is completed. The detailed code symbol 3250 is a code symbol indicating the maintenance content. That is, the detailed code symbol 3250 is a code symbol indicating the amount to be replenished for each denomination and the amount to be collected for each denomination. When the detailed code symbol 3250 is read, the POS terminal 10 executes dispensing and accepting of the amount for each instructed denomination. The detailed code symbol 3250 may be generated by the display control unit 3003 based on the maintenance information or may be included in the maintenance information.

In addition, the input of completion of maintenance is not limited to pressing the completion button 3240. For example, the POS terminal 10 of the cash teller unit 104 stores the cash stored in the storage unit in the amount of bills (and/or coins) in balance for each denomination by counting the number of bills (and/or coins) accepted or dispensed. Therefore, the POS terminal 10 notifies the store server 20 that maintenance is completed on that condition that the maintenance content indicated by the detailed code symbol 3250 is executed. Then, the store server 20 provides the mobile terminal 30 a notification indicating that maintenance is completed for the POS terminal 10 that has transmitted the notification. In this manner, the mobile terminal 30 may accept input of completion of maintenance.

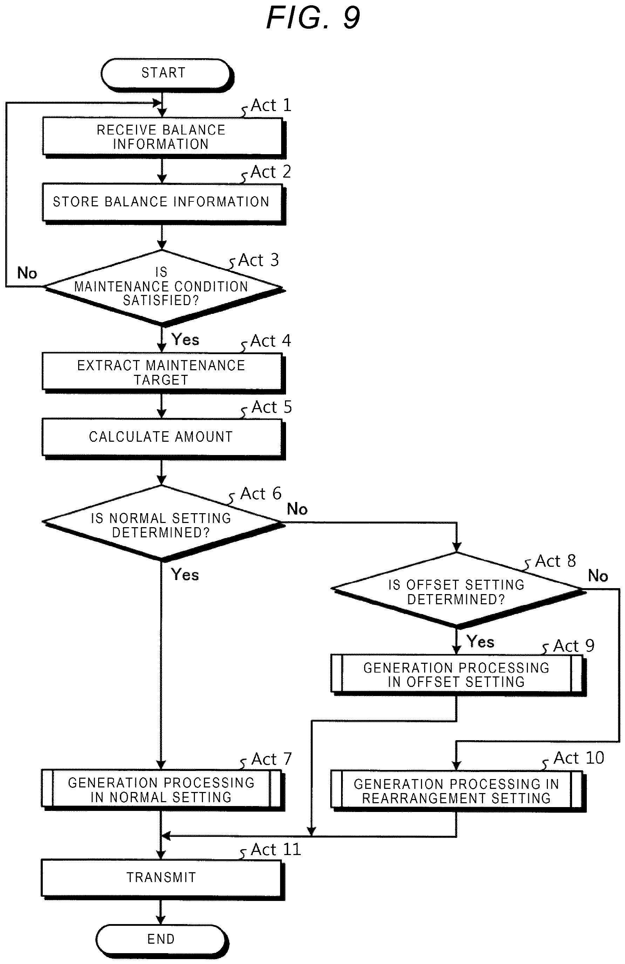

Next, maintenance notification processing executed by the store server 20 will be described. FIG. 9 is a flowchart showing an example of maintenance notification processing executed by the store server 20 according to the present embodiment.

The communication control unit 2001 receives balance information from each POS terminal 10 (Act 1). In addition, the balance information management unit 2002 stores the balance information received by the communication control unit 2001 in the balance information table 208 (Act 2).

The maintenance condition determination unit 2003 determines whether or not the maintenance condition is satisfied based on the condition content such as a current date and time and the state of the balance information table 208 (Act 3). When the maintenance condition is not satisfied (Act 3; No), the store server 20 proceeds to Act 1.

On the other hand, on that condition that the maintenance condition is satisfied (Act 3: Yes), the maintenance target extraction unit 2004 extracts a maintenance target machine which is the POS terminal 10 to be maintained (Act 4).

The maintenance amount determination unit 2005 calculates the amount be replenished or collected for each denomination for each maintenance target machine (Act 5).

The maintenance information generation unit 2006 determines whether or not the generation setting for generating maintenance information is the normal setting (Act 6). On that condition that the generation setting is the normal setting (Act 6: Yes), the store server 20 executes generation processing for generating maintenance information according to the normal setting (Act 7).

On that condition that the generation setting is not the normal setting (Act 6: No), the maintenance information generation unit 2006 determines whether or not the generation setting is the offset setting (Act 8).

On the condition that the generation setting is the offset setting (Act 8: Yes), the store server 20 executes generation processing for generating maintenance information according to the offset setting (Act 9).

On the condition that the generation setting is not the offset setting (Act 8: No), the store server 20 executes generation processing for generating maintenance information according to the rearrangement setting (Act 10).

Then, the communication control unit 2001 transmits the maintenance information generated in one of Acts S7, S9, and S10 to the mobile terminal 30 (Act 11).

Thus, the store server 20 ends the maintenance notification processing.

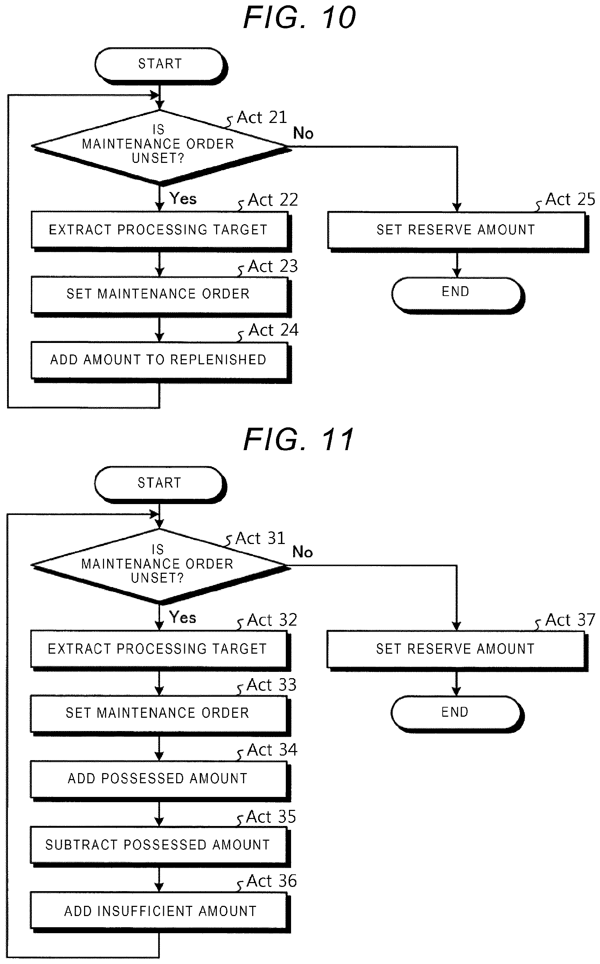

Next, generation processing in the normal setting executed by the store server 20 will be described. FIG. 10 is a flowchart showing an example of generation processing according to the normal setting executed by the store server 20 of the present embodiment (Act 7 in FIG. 9).

The maintenance information generation unit 2006 determines whether or not there is a maintenance target machine for which maintenance order is not set (Act 21). On the condition that there is a maintenance target machine for which maintenance order is not set (Act 21: Yes), the maintenance information generation unit 2006 extracts the maintenance target machine having the highest order of priority from one or a plurality of maintenance target machines for which maintenance order is not set as processing targets (Act 22).

The maintenance information generation unit 2006 sets the order of priority of the maintenance target machine to be processed as the maintenance order (Act 23).

The maintenance information generation unit 2006 adds the amount to be replenished for each denomination to the maintenance target machine to be processed to the replenished amount indicating the amount of bills (or coins) so far replenished for each denomination (Act 24). In addition, the store server 20 proceeds to Act 21.

Then, on the condition that there is no maintenance target machine for which the maintenance order is not set (Act 21: No), the maintenance information generation unit 2006 sets the replenishment amount to the reserve amount (Act 25).

Thus, the store server 20 ends the generation processing according to the normal setting.

Next, generation processing in the offset setting executed by the store server 20 will be described. FIG. 11 is a flowchart showing an example of generation processing according to the offset setting executed by the store server 20 of the present embodiment (Act 9 in FIG. 9).

The maintenance information generation unit 2006 determines whether or not there is a maintenance target machine for which maintenance order is not set (Act 31). On the condition that there is a maintenance target machine for which maintenance order is not set (Act 31: Yes), the maintenance information generation unit 2006 extracts the maintenance target machine having the highest order of priority from one or a plurality of maintenance target machines for which maintenance order is not set as processing targets (Act 32).

The maintenance information generation unit 2006 sets the order of priority of the maintenance target machine to be processed as the maintenance order (Act 33).

The maintenance information generation unit 2006 adds the amount collected from the maintenance target machine to be processed for each denomination to the cumulative amount for each denomination to be added in the case of collection and subtracted in the case of replenishment (Act 34).

The maintenance information generation unit 2006 subtracts the amount to be replenished for each denomination to the maintenance target machine to be processed from the cumulative amount (Act 35). The maintenance information generation unit 2006 sets the subtraction result to 0 even when the amount to be replenished is larger than the cumulative amount.

The maintenance information generation unit 2006 adds the amount that cannot be replenished in Act 35 for each denomination to an insufficient amount indicating the amount for each denomination that is insufficient with the replenishment so far (Act 36). That is, when the amount to be replenished is larger than the cumulative amount, the maintenance information generation unit 2006 determines the insufficient amount by subtracting the cumulative amount from the amount to be replenished. In addition, the store server 20 proceeds to Act 31.

Then, on the condition that there is no maintenance target machine for which the maintenance order is not set (Act 31: No), the maintenance information generation unit 2006 sets the insufficient amount to the reserve amount (Act 37).

Thus, the store server 20 ends the generation processing according to the offset setting.

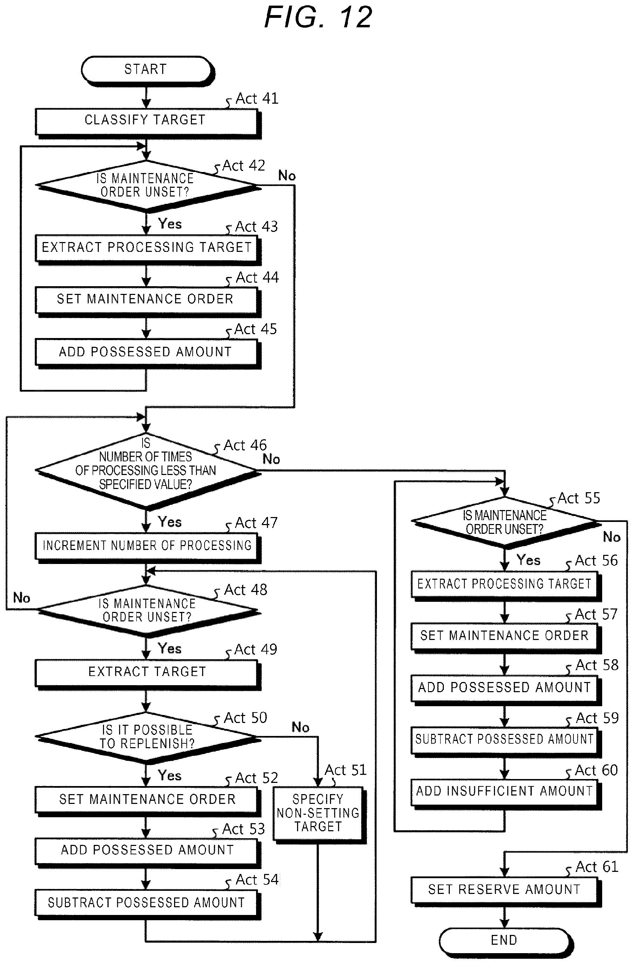

Next, generation processing in the rearrangement setting executed by the store server 20 will be described. FIG. 12 is a flowchart showing an example of generation processing (Act 10 in FIG. 9) according to the rearrangement setting executed by the store server 20 of the present embodiment.

The maintenance information generation unit 2006 classifies the maintenance target machines according to the maintenance content such as collection, collection and replenishment, or replenishment (Act 41).

The maintenance information generation unit 2006 determines whether or not there is a maintenance target machine that is classified as collection and for which maintenance order is not set (Act 42). On condition that there is a maintenance target machine that is classified as collection and for which maintenance order is not set (Act 42: Yes), the maintenance information generation unit 2006 extracts the maintenance target machine having the highest order of priority from the maintenance target machines as a processing target (Act 43).

The maintenance information generation unit 2006 sets a value obtained by incrementing a variable as the maintenance order of the maintenance target machine to be processed (Act 44). That is, the maintenance information generation unit 2006 sets 1 in the maintenance order in the case of the first time and sets the next maintenance order set in the previous time in the second time and thereafter.

The maintenance information generation unit 2006 adds the amount for each denomination collected from the maintenance target machine to be processed to the cumulative amount for each denomination to be added in the case of collection and subtracted in the case of replenishment (Act 45). In addition, the store server 20 proceeds to Act 42.

On the condition that there is no maintenance target machine that is classified as collection and for which maintenance order is not yet set (Act 42: No), the maintenance information generation unit 2006 determines whether or not the number of times of processing for the maintenance target machine classified as collection and replenishment is less than a prescribed value (Act 46).

On the condition that the number of times of processing is less than the prescribed value (Act 46: Yes), the maintenance information generation unit 2006 increments the number of times of processing (Act 47).

The maintenance information generation unit 2006 determines whether or not there is a maintenance target machine that is classified as collection and replenishment and for which maintenance order is not set (Act 48). On the condition that there is no maintenance target machine that is classified as collection and replenishment and for which maintenance order is not yet set (Act 48: No), the store server 20 proceeds to Act 46.

On condition that there is a maintenance target machine that is classified as collection and replenishment, and for which maintenance order is not yet set (Act 48: Yes), the maintenance information generation unit 2006 extracts the maintenance target machine having the highest order of priority from the maintenance target machines as a processing target (Act 49).

The maintenance information generation unit 2006 determines whether or not it is possible to replenish the extracted maintenance target machine with the cumulative amount (Act 50). On the condition that replenishment is not possible (Act 50: No), the maintenance information generation unit 2006 specifies the maintenance target machine to be processed out of the setting targets (Act 51) until the number of times of processing is incremented in Act 47. Then, the store server 20 proceeds to Act 48.

On the condition that replenishment is possible (Act 50: Yes), the maintenance information generation unit 2006 sets a value obtained by incrementing the variable as the maintenance order of the maintenance target machine to be processed (Act 52).

The maintenance information generation unit 2006 adds the amount for each denomination collected from the maintenance target machine to be processed to the cumulative amount (Act 53). The maintenance information generation unit 2006 subtracts the amount for each denomination to be replenished to the maintenance target machine to be processed from the cumulative amount (Act 54). Then, the store server 20 proceeds to Act 48.

On the condition that the number of times of processing is the prescribed value (Act 46: No), the store server 20 performs the same processing as that from Act 31 to Act 36 of the generation processing according to the offset setting shown in FIG. 11 from Act 55 to Act 60. At that time, the store server 20 executes the processing with respect to the maintenance target machines that are classified as collection and replenishment and for which the maintenance order is not yet set in the order of priority and then, executes the processing with respect to the maintenance target machines that are classified as replenishment in order of priority.

The maintenance information generation unit 2006 sets the insufficient amount as the reserve amount (Act 61).

Thus, the store server 20 ends the generation process in the rearrangement setting.

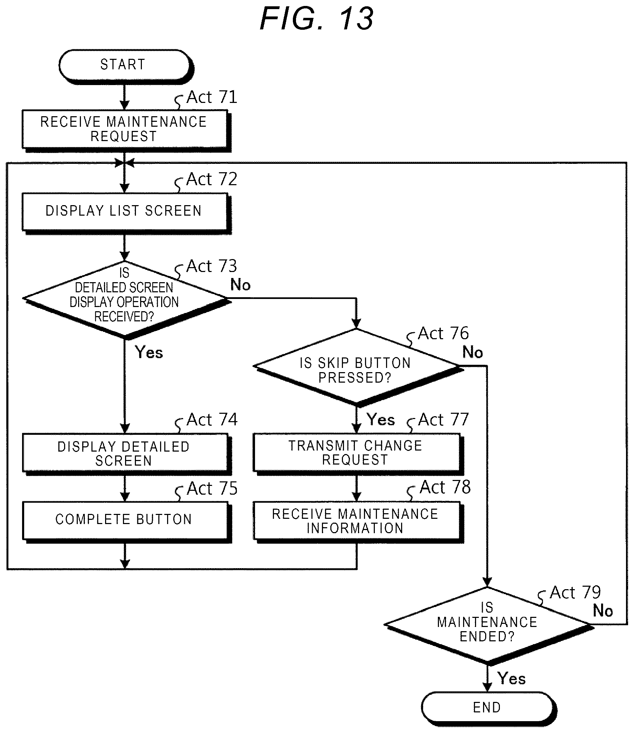

Next, maintenance processing executed by the mobile terminal 30 will be described. FIG. 13 is a flowchart showing an example of maintenance processing executed by the mobile terminal 30 according to the present embodiment.

The communication control unit 3001 receives a maintenance request from the store server 20 (Act 71).

The display control unit 3003 displays the list screen 3100 based on the maintenance information included in the maintenance request (Act 72).

The operation control unit 3002 determines whether or not an operation for displaying the detailed screen 3200 is accepted in the list screen 3100 (Act 73). On the condition that an operation for displaying the detailed screen 3200 is accepted (Act 73: Yes), the display control unit 3003 displays the detailed screen 3200 (Act 74).

The operation control unit 3002 receives an operation of pressing the completion button 3240 in the detailed screen 3200 (Act 75). The display control unit 3003 returns to Act 72 and displays the list screen 3100. At that time, the display control unit 3003 displays the execution mark of the list screen 3100 with the implementation content changed to complete.

On the condition that an operation for displaying the detailed screen 3200 is not accepted (Act 73: No), the operation control unit 3002 determines whether or not an input to press the skip button 3130 is received (Act 76). On the condition that an input to press the skip button 3130 is accepted (Act 76: Yes), the communication control unit 3001 transmits a request for changing the maintenance order to skip the maintenance target machine to the store server 20 (Step S77). The communication control unit 3001 receives the maintenance information for skipping the maintenance target machine (Act 78).

On the condition that the input to press the skip button 3130 is not accepted (Act 76: No), it is determined whether or not maintenance is ended with respect to the maintenance target machine of the list screen 3100 (Act 79). On the condition that maintenance is not ended (Act 79: No), the mobile terminal 30 returns to Act 72.

On the condition that the maintenance is ended (Act 79: Yes), the mobile terminal 30 ends the maintenance processing.

As described above, according to the management system 1 of the present embodiment, the store server 20 stores the balance of the cash stored in the cash teller unit 104 of the POS terminal 10 in the balance information table 208. Then, the store server 20 extracts maintenance targets based on the balance stored in the balance information table 208 when maintenance is performed to adjust the cash balance. Then, the store server 20 transmits maintenance information having a maintenance order which is an order of performing maintenance with respect to the extracted maintenance targets to the mobile terminal 30. The store clerk may perform the maintenance based on the maintenance order displayed on the mobile terminal 30. Therefore, the store server 20 according to the present embodiment may efficiently manage the balance of cash.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

In addition, in the above embodiment, the generation setting for generating maintenance information includes the normal setting, the offset setting, and the rearrangement setting. Then, it is described that the maintenance information generation unit 2006 determines the order of maintenance and the reserve amount based on the generation setting. However, the setting information is not limited to the three settings described above. For example, the setting information may include a round-trip setting, a security setting, a short-distance setting, and the like.

The round-trip setting is a setting that the travel distance of the clerk who performs collection and replenishment of notes is reduced. That is, the round-trip setting is a setting that notes are collected from the POS terminal 10 in order of the distance from the backyard and notes are replenished to the POS terminal 10 in order of the distance from the backyard. Then, the round-trip setting is a setting that a shortfall in the case of using the collected notes for replenishment is set as the reserve amount.

More specifically, the maintenance information generation unit 2006 arranges the POS terminals 10 of which notes to be collected among the POS terminals 10 extracted by the maintenance target extraction unit 2004 in order of priority. In addition, the maintenance information generation unit 2006 arranges the POS terminals 10 to be replenished with notes among the POS terminals 10 extracted by the maintenance target extraction unit 2004 in the reverse order of priority. Then, the maintenance information generation unit 2006 generates a maintenance order by arranging each of the POS terminals 10 to be replenished with notes after each of the POS terminals 10 of which notes to be collected. In addition, the maintenance information generation unit 2006 calculates the insufficient amount for each denomination by subtracting the replenishment amount from the collection amount for each denomination. Then, the maintenance information generation unit 2006 sets the calculated insufficient amount as the reserve amount.

The security setting is a setting to prevent a crime by shortening the distance that a store clerk carries notes to be replenished. That is, in the security setting, one or a plurality of POS terminals 10 are replenished with the notes taken out from the backyard. Further, the security setting is a setting that one or a plurality of nearby POS terminals 10 are replenished with the notes collected from the POS terminal 10.

More specifically, the maintenance information generation unit 2006 calculates the total amount of notes replenished to each POS terminal 10 for each denomination. In addition, the maintenance information generation unit 2006 calculates the total amount of notes collected from each POS terminal 10 for each denomination. The maintenance information generation unit 2006 subtracts the total amount of notes collected from the total amount of notes to be replenished for each denomination. As a result, the maintenance information generation unit 2006 calculates the insufficient amount of the notes to be replenished for each denomination. Then, the maintenance information generation unit 2006 sets the insufficient amount for each denomination to the reserve amount.

The maintenance information generation unit 2006 arranges the POS terminals 10 to be replenished with the notes of the reserve amount in the order of priority. In addition, the maintenance information generation unit 2006 extracts the POS terminal 10 near the POS terminal 10 which is finally replenished with the notes of the reserve amount among the POS terminals 10 from which the notes extracted by the maintenance target extraction unit 2004 are collected. That is, the maintenance information generation unit 2006 extracts the POS terminal 10 having the order of priority closest to the order of priority of the POS terminal 10, which is the POS terminal 10 of which notes are collected and which is finally replenished the notes of the reserve amount.

In addition, the maintenance information generation unit 2006 extracts the POS terminal 10 to be replenished with the notes collected from the POS terminal 10. That is, the maintenance information generation unit 2006 extracts the POS terminal 10 having the priority order closest to the order of priority of the POS terminal 10 of which notes are collected, which is the POS terminal 10 to be replenished with notes. Even when the POS terminal 10 is replenished with the collected notes, when there is a remainder in the collected notes, the maintenance information generation unit 2006 extracts the POS terminal 10 which is a replenishment target of the remaining notes and has the next order of priority. Until the collected notes do not exist, the maintenance information generation unit 2006 extracts the POS terminal 10 to be replenished with notes.

In addition, the maintenance information generation unit 2006 extracts the POS terminal 10 near the POS terminal 10 which is finally replenished with the collected notes among the POS terminals 10 from which the notes extracted by the maintenance target extraction unit 2004 are collected. Then, the maintenance information generation unit 2006 extracts the POS terminal 10 to be replenished with the notes collected from the extracted POS terminal 10. The maintenance information generation unit 2006 repeats this processing until there is no POS terminal 10 of which notes to be collected are collected. The maintenance information generation unit 2006 sets the maintenance order by arranging the POS terminals 10 extracted in this way in the order of extraction after the POS terminal 10 to be replenished with the notes of the reserve amount.

The short-distance setting is a setting that the travel distance of the clerk who performs collection and replenishment of notes is reduced. Here, in the case of a large store such as a department store or the like, the POS terminals 10 may not be closely packed and may be installed at a remote location. For example, the short-distance setting is a setting that the travel distance of a store clerk is reduced by an algorithm for extracting the shortest route such as Dijkstra's method in such a large store.

More specifically, the maintenance information generation unit 2006 uses map information showing an installation position where each POS terminal 10 is installed to extract a travel route on which the store clerk travels on the shortest route from each POS terminal 10 extracted by the maintenance target extraction unit 2004 by Dijkstra's method. Then, the maintenance information generation unit 2006 sets the order of the extracted travel routes in the maintenance order. Further, the maintenance information generation unit 2006 calculates the insufficient amount for each denomination by subtracting the replenishment amount from the collection amount for each denomination. Then, the maintenance information generation unit 2006 sets the calculated insufficient amount as the reserve amount.

In addition, in the above embodiment, the case where the POS terminal 10 includes the cash teller unit 104 has been described as an example. For example, a self-checkout POS terminal or a semi-self checkout POS terminal may have a cash teller unit 104 other than the POS terminal 10. The self-checkout POS terminal is a device in which a customer himself or herself performs operations related to sales registration for registering commodities to be sold and accounting processing of registered commodities. The semi-self checkout POS terminal is a device in which a customer himself or herself performs operations related to sales registration for registering commodities to be sold and accounting processing of registered commodities. In addition, in the management system 1, the POS terminal 10, the self-checkout POS terminal including the cash teller unit 104, and the semi-self checkout POS terminal including the cash teller unit 104 may be mixed.

In addition, in the above embodiment, it is described that the POS terminal 10 includes the communication control unit 1001, the reading control unit 1002, the sales registration unit 1003, the accounting unit 1004, the balance information generation unit 1005, and the maintenance control unit 1006 as the POS terminal 10 operates according to the control program 110. However, a part of these functional units may be provided by the cash teller unit 104, which is the cash teller unit 104.

In addition, in the above embodiment, the POS terminal 10 or the mobile terminal 30 may include a beacon transmitter that transmits a beacon by short-distance wireless communication such as Bluetooth (registered trademark) low energy (BLE). The store server 20 may specify a position where the mobile terminal 30 is located by receiving a reception notification indicating that a beacon is received from the POS terminal 10 or the mobile terminal 30. The store server 20 may more efficiently provide the order by setting the maintenance order based on the position where the mobile terminal 30 is located, for example, when receiving a change request of the maintenance information.

In addition, in the above embodiment, the case of collection and replenishment has been described as an example of maintenance for adjusting the balance of the notes stored in the cash teller unit 104. Maintenance to adjust the balance of notes may be currency exchange. In the case of currency exchange for collecting notes, the cash teller unit 104 accepts notes of the same amount as the amount of the notes of the denomination to be collected with a denomination different from the denomination to be collected. In addition, in the case of currency exchange for replenishing notes, the cash teller unit 104 dispenses notes of the same amount as the accepted amount of the notes of the denomination to be replenished with a denomination different from the denomination to be replenished. In addition, in the case of currency exchange, the store server 20 transmits maintenance information indicating currency exchange. Then, the mobile terminal 30 displays maintenance information indicating replenishment by currency exchange or collection by currency exchange on the list screen 3100 and the detailed screen 3200.

In addition, in the above embodiment, it is described that the store server 20 transmits the maintenance information to the mobile terminal 30. However, the store server 20 may transmit maintenance information to a device other than the mobile terminal 30. For example, the store server 20 may transmit maintenance information to a printing device such as a printer. In this case, the printer prints out the image data corresponding to the list screen 3100 and the detailed screen 3200 based on the maintenance information. Then, the store clerk may perform maintenance to adjust the balance of the notes stored in the cash teller unit 104 according to the printed matter printed out.

In addition, in the above embodiment, it is described that the POS terminal 10, the store server 20, or the mobile terminal 30 calculates or displays the amount for each denomination of the notes. However, the POS terminal 10, the store server 20, or the mobile terminal 30 may calculate or display the number of notes for each denomination. In addition, the POS terminal 10, the store server 20, or the mobile terminal 30 may calculate or display both the amount and the number of notes.

The programs to be executed by each device of the above embodiment or modification examples are assumed to be provided by being incorporated in advance in a storage medium (ROM or storage unit) included in each device, but are not limited thereto. For example, the programs may be configured to be recorded and provided in a computer-readable recording medium such as a CD-ROM, a flexible disk (FD), a CD-R, a digital versatile disk (DVD) or the like in a file in an installable format or an executable format. Further, the storage medium is not limited to a medium independent of a computer or an embedded system, but includes a storage medium in which a program transmitted by a LAN, the Internet, or the like is downloaded and stored or temporarily stored.

In addition, the programs to be executed by each device of the above embodiment or modification examples may be stored on a computer connected to a network such as the Internet and configured to be provided by being downloaded via the network, and configured to be provided or distributed via the network as the Internet.

## Claims

1. A register system including a plurality of computing devices communicating with each other over the network to improve functionality of the register system, said register system comprising:
a server device; and
a plurality of register devices connected to the server device over the network, wherein
each of the registers devices is configured to transmit status data to the server, and
the server device is configured to generate maintenance information from the status data and output to a mobile device the maintenance information for improving the functionality of the register system.

2. The system according to claim 1, wherein the server device includes:
a storage device that stores for each of the register devices, data relating to required maintenance including at least one of collecting cash and replenishing cash; and
a processor configured to:
receive as the status data, from each of the plurality of register devices, cash balance information of each denomination of cash stored in the corresponding register device,
determine, for each of the plurality of register devices and based on the corresponding received cash balance compared to a maintenance condition, whether the required maintenance needs to be performed,
for each of the plurality of register devices on which the required maintenance needs to be performed, determine an order for performing the required maintenance and an amount of cash to be collected or replenished, and
generate and transmit, to the mobile device, the maintenance information, which includes
the determined order for performing the required maintenance of each of the plurality of register devices on which the required maintenance needs to be performed, and
the determined amount of cash to be collected or replenished for each of the plurality of register devices on which the required maintenance needs to be performed.

3. The system according to claim 2, wherein the maintenance information further includes list screen information for displaying, on a display of the mobile device, a list screen that includes a list of each of the plurality of register devices on which the required maintenance needs to be performed arranged in the determined order.

4. The system according to claim 3, wherein:
the list screen accepts an input with respect to any one of the plurality of register devices on which the required maintenance needs to be performed, and
the maintenance information further includes detailed screen information for displaying, on the display of the mobile device in response to the accepted input, a detailed screen that includes:
details of the required maintenance to be performed on the one of the plurality of register devices corresponding to the input, and
a code symbol that, when scanned by the one of the plurality of register devices corresponding to the input, causes the register device to dispense or accept cash in accordance with the required maintenance.

5. The system according to any one of claims 2 to 4, wherein the order is determined according to a selected one of a plurality of settings.

6. The system according to claim 5, wherein one of the plurality of settings is a normal setting in which the order is determined in accordance with a predetermined order.

7. The system according to claim 6, wherein another one of the plurality of settings is an offset setting in which the order is determined so that cash collected in accordance with the required maintenance for one of the plurality of register devices can subsequently be used to replenish cash in accordance with the required maintenance for another one of the plurality of register devices.

8. The system according to claim 6, wherein another one of the plurality of settings is a rearrangement setting in which the order is determined so that each of the plurality of register devices are grouped according to whether the corresponding required maintenance is one of: only collecting cash, collecting and replenishing cash, and only replenishing cash.

9. A method of managing cash stored in a plurality of register devices that dispense and receive cash, the method comprising:
storing a maintenance condition indicating a required maintenance for one of the plurality of register devices, the required maintenance including at least one of collecting cash and replenishing cash;
receiving, from each of the plurality of register devices, cash balance information of each denomination of cash stored in the corresponding register device;
determining, for each of the plurality of register devices and based on the corresponding received cash balance compared to the maintenance condition, whether the required maintenance needs to be performed;
for each of the plurality of register devices on which the required maintenance needs to be performed, determining an order for performing the required maintenance and an amount of cash to be collected or replenished; and
generating and transmitting, to a mobile device, maintenance information including:
the determined order for performing the required maintenance of each of the plurality of register devices on which the required maintenance needs to be performed, and
the determined amount of cash to be collected or replenished for each of the plurality of register devices on which the required maintenance needs to be performed.

10. The method according to claim 9, wherein the maintenance information further includes list screen information for displaying, on a display of the mobile device, a list screen that includes a list of each of the plurality of register devices on which the required maintenance needs to be performed arranged in the determined order.

11. The method according to claim 10, wherein:
the list screen accepts an input with respect to any one of the plurality of register devices on which the required maintenance needs to be performed, and
the maintenance information further includes detailed screen information for displaying, on the display of the mobile device in response to the accepted input, a detailed screen that includes:
details of the required maintenance to be performed on the one of the plurality of register devices corresponding to the input, and
a code symbol that, when scanned by the one of the plurality of register devices corresponding to the input, causes the register device to dispense or accept cash in accordance with the required maintenance.

12. The method according to any one of claims 9 to 11, wherein the order is determined according to a selected one of a plurality of settings.

13. The method according to claim 12, wherein one of the plurality of settings is a normal setting in which the order is determined in accordance with a predetermined order.

14. The method according to claim 13, wherein another one of the plurality of settings is an offset setting in which the order is determined so that cash collected in accordance with the required maintenance for one of the plurality of register devices can subsequently be used to replenish cash in accordance with the required maintenance for another one of the plurality of register devices.

15. A non-transitory computer readable medium storing a program causing a computer to execute the method according to any one of claims 9 to 14.
